# EUROPÄISCHE PATENTSCHRIFT

(11) **EP 1 610 218 B1**
(45) Veröffentlichungstag und Bekanntmachung des Hinweises auf die Patenterteilung: **08.08.2018**
(21) Anmeldenummer: 05012875.0
(22) Anmeldetag: 15.06.2005
(51) Int. Cl.: G06F 9/48

(54) **Tragbarer Datenträger, System mit einem solchen Datenträger und Verfahren zum Betreiben eines solchen Datenträgers**
Portable data carrier, system with said data carrier and method of operating said data carrier
Support de données portable, système comprenant ledit support et procédé de mise en oeuvre dudit support

(30) Priorität: 16.06.2004 DE 102004029104
(43) Veröffentlichungstag der Anmeldung: 28.12.2005
(73) Patentinhaber: Giesecke+Devrient Mobile Security GmbH, 81677 München (DE)
(72) Erfinder: Hildinger, Peter, 82319 Starnberg (DE)

(56) Entgegenhaltungen:
- US-A1- 2003 188 141
- US-B1- 6 676 022
- LIAO S S W ET AL: "Post-pass binary adaptation for software-based speculative precomputation" ACM SIGPLAN NOTICES, ACM, ASSOCIATION FOR COMPUTING MACHINERY, NEW YORK, NY, US, Bd. 37, Nr. 5, Mai 2002 (2002-05), Seiten 117-128, XP002302652 ISSN: 0362-1340
- STEINMAN J S: "Interactive SPEEDES" SIMULATION SYMPOSIUM, 1991., PROCEEDINGS OF THE 24TH ANNUAL NEW ORLEANS, LA, USA 1-5 APRIL 1991, LOS ALAMITOS, CA, USA,IEEE COMPUT. SOC, US, 1. April 1991 (1991-04-01), Seiten 149-158, XP010024259 ISBN: 0-8186-2169-9
- GANESH LAKSHMINARAYANA ET AL: "Incorporating Speculative Execution into Scheduling of Control-Flow-Intensive Designs" IEEE TRANSACTIONS ON COMPUTER AIDED DESIGN OF INTEGRATEDCIRCUITS AND SYSTEMS, IEEE SERVICE CENTER, PISCATAWAY, NJ, US, Bd. 19, Nr. 3, 1. März 2000 (2000-03-01), XP011007825 ISSN: 0278-0070
- SILBERSCHATZ A ET AL: "OPERATING SYSTEM CONCEPTS, PASSAGE" OPERATING SYSTEM CONCEPTS, XX, XX, 1. Januar 1994 (1994-01-01), Seiten I-III,97, XP002357389

## Beschreibung

Die Erfindung betrifft ein Verfahren zum Betreiben eines tragbaren Datenträgers. Weiterhin betrifft die Erfindung einen tragbaren Datenträger und ein System aus einem tragbaren Datenträger und einem Endgerät.

Tragbare Datenträger können beispielsweise in Form von Chipkarten vielfältig eingesetzt werden. Sie eignen sich als Ausweisdokumente, zum Nachweis einer Zugangsberechtigung zu einem Mobilfunknetz, zur Durchführung von Transaktionen des bargeldlosen Zahlungsverkehrs usw. Neben dem Sicherheitsaspekt, der bei vielen Anwendungen seit jeher eine wichtige Rolle spielt, gewinnt die Geschwindigkeit, mit der die jeweilige Anwendung abgewickelt wird, zunehmend an Bedeutung. Insbesondere bei kleinformatigen tragbaren Datenträgern, wie beispielsweise Chipkarten, ist die verfügbare Rechenleistung allerdings begrenzt. Zwar werden auch hierfür zunehmend leistungsfähigere integrierte Schaltkreise verfügbar. Zum einen wird aber angesichts der ebenfalls wachsenden Möglichkeiten potentieller Angreifer immer mehr Rechenleistung für sicherheitstechnische Maßnahmen benötigt. Zum anderen ist häufig eine möglichst kostengünstige Ausführung des tragbaren Datenträgers erwünscht, so dass leistungsfähige integrierte Schaltkreise zwar in der Regel verfügbar sind, aus Kostengründen jedoch nicht immer eingesetzt werden.

Als eine Möglichkeit der Erhöhung der Arbeitsgeschwindigkeit eines Computers ist es bekannt, einen schnellen Speicher als einen Cache vorzusehen und dort Daten zwischenzuspeichern, die in ein langsames Speichermedium eingeschrieben oder von diesem gelesen werden. Falls diese Daten erneut benötigt werden, solange sie noch im Cache verfügbar sind, reduziert sich die Zugriffszeit auf diese Daten erheblich und die Ausführungsgeschwindigkeit des Computers steigt, da nicht so lange auf die Daten gewartet werden muss. In diesem Zusammenhang ist es aus der US 2002/0178331 A1 bekannt, zur Vorbereitung von Datenübertragungsoperationen Daten von einem Speichersystem in einen Cache zu überführen. Hierzu teilt eine erste Verarbeitungseinheit einer zweiten Datenverarbeitungseinheit, die den Zugang zum Speichersystem steuert, die Datenübertragungsoperationen mit. Insbesondere veranlasst die erste Verarbeitungseinheit die zweite Verarbeitungseinheit Daten in den Cache zu überführen und auf Anfrage der ersten Verarbeitungseinheit aus dem Cache auszugeben.

Aus Dokument US 6,676,022 B1 ist bekannt, wie auf einer Chipkarte Kommandos, die zur Ausführung anstehen, in eine Warteschlange zwischengespeichert werden.

Der Erfindung liegt die Aufgabe zugrunde, mit möglichst geringem Aufwand die Ausführungsgeschwindigkeit eines tragbaren Datenträgers zu erhöhen.

Diese Aufgabe wird durch ein Verfahren mit der Merkmalskombination des Anspruchs 1 gelöst.

Beim erfindungsgemäßen Verfahren zum Betreiben eines tragbaren Datenträgers, der einen integrierten Schaltkreis aufweist, werden vom tragbaren Datenträger mehrere Operationen gemäß einer vorgegebenen Abfolge ausgeführt. Die Besonderheit des erfindungsgemäßen Verfahrens besteht darin, dass vom tragbaren Datenträger wenigstens eine Operation einer vorgezogenen Bearbeitung unterzogen wird, bevor sie gemäß der vorgegebenen Abfolge zur Ausführung ansteht.

Die Erfindung hat den Vorteil, dass die Ausführungsgeschwindigkeit des tragbaren Datenträgers ohne nennenswerten Aufwand erhöht werden kann. Ein weiterer Vorteil besteht darin, dass zur Realisierung des erfindungsgemäßen Verfahrens keine Änderungen an der Hardware des tragbaren Datenträgers erforderlich sind, sondern lediglich das Betriebssystem geringfügig zu modifizieren ist.

Im Rahmen der vorgezogenen Bearbeitung kann die Ausführung der Operation vorbereitet werden und/oder die Operation wenigstens teilweise ausgeführt werden. Dies bedeutet, dass immer der größtmögliche Umfang an vorzeitiger Bearbeitung vorgenommen werden kann. Auch wenn eine vollständige oder teilweise Ausführung beispielsweise wegen noch nicht vorliegender Eingabedaten nicht möglich ist, können zumindest Maßnahmen getroffen werden, welche die spätere Ausführung beschleunigen.

Zur Durchführung der vorgezogenen Bearbeitung kann eine dafür vorgesehene Funktion aufgerufen werden. Dies ermöglicht eine übersichtliche Implementierung der vorgezogenen Bearbeitung und erleichtert spätere Änderungen.

In einem bevorzugten Ausführungsbeispiel des erfindungsgemäßen Verfahrens wird die vorgezogene Bearbeitung nur dann veranlasst, wenn keine Operation aus der vorgegebenen Abfolge von Operationen aktuell zur Ausführung ansteht. Dadurch kann sichergestellt werden, dass mit der vorgezogenen Bearbeitung tatsächlich eine Beschleunigungswirkung erzielt wird. Um unnötige Doppelarbeit zu vermeiden ist es zudem von Vorteil, wenn geprüft wird, welche Operationen bereits vorgezogen bearbeitet wurden. Diese Operationen können dann bei der aktuell durchgeführten vorgezogenen Bearbeitung ausgespart werden. Die vorgezogene Bearbeitung kann beendet werden, wenn festgestellt wird, dass eine Operation aus der vorgegebenen Abfolge von Operationen aktuell zur Ausführung ansteht. Dadurch können Verzögerungen bei der Ausführung der einzelnen Operationen vermieden werden. Das Ergebnis der vorgezogenen Bearbeitung einer Operation kann herangezogen werden, wenn diese Operation gemäß der vorgegebenen Abfolge aktuell zur Ausführung ansteht. Dadurch kann die Ausführung der Operation beschleunigt werden oder sogar entfallen, wenn die Ausführung bereits im Rahmen der vorgezogenen Bearbeitung dieser Operation erfolgte.

Im Rahmen des erfindungsgemäßen Verfahrens kann vorgesehen sein, dass die vorgegebene Abfolge von Operationen vom tragbaren Datenträger ermittelt wird. Dabei wird die Ermittlung vorzugsweise auf Basis wenigstens einer bereits zur Ausführung anstehenden Operation aus der vorgegebenen Abfolge von Operationen durchgeführt. Die ermittelte Abfolge kann zu einem späteren Zeitpunkt vom tragbaren Datenträger überprüft werden. Dies ist insbesondere dann angeraten, wenn die Ermittlung der vorgegebenen Abfolge nicht zu einem eindeutigen Ergebnis führt. Dabei sollten die Ergebnisse der vorgezogenen Bearbeitung verworfen werden, wenn die Überprüfung ergibt, dass die vorgegebene Abfolge von Operationen, auf deren Basis die vorgezogene Bearbeitung durchgeführt wurde, in unzutreffender Weise ermittelt wurde.

Bei den Operationen kann es sich insbesondere um Kommandos handeln, die dem tragbaren Datenträger von einem Endgerät übermittelt werden. In diesem Fall kann die vorgezogene Bearbeitung jeweils innerhalb eines Zeitraums veranlasst werden, innerhalb dessen der tragbare Datenträger auf den Eingang eines Kommandos vom Endgerät wartet. Dadurch kann die Wartezeit zur Erhöhung der Verarbeitungsgeschwindigkeit des tragbaren Datenträgers genutzt werden.

Der erfindungsgemäße tragbare Datenträger weist einen integrierten Schaltkreis zur Ausführung von Operationen auf. Die Besonderheit des erfindungsgemäßen tragbaren Datenträgers besteht darin, dass im integrierten Schaltkreis eine Funktionalität implementiert ist, gemäß der wenigstens eine Operation einer vorgezogenen Bearbeitung unterzogen wird, bevor sie gemäß einer vorgegebenen Abfolge zur Ausführung ansteht. Insbesondere ist der erfindungsgemäße tragbare Datenträger als eine Chipkarte ausgeführt.

Das erfindungsgemäße System weist einen tragbaren Datenträger mit einem integrierten Schaltkreis und ein Endgerät auf. Der tragbare Datenträger und das Endgerät besitzen Übertragungseinrichtungen, über die sie miteinander kommunizieren können. Im Rahmen dieser Kommunikation werden vom tragbaren Datenträger mehrere Operationen gemäß einer vorgegebenen Abfolge ausgeführt. Das erfindungsgemäße System zeichnet sich dadurch aus, dass im integrierten Schaltkreis des tragbaren Datenträgers eine Funktionalität implementiert ist, gemäß der vom tragbaren Datenträger wenigstens eine Operation einer vorgezogenen Bearbeitung unterzogen wird, bevor sie gemäß der vorgegebenen Abfolge zur Ausführung ansteht.

Die Erfindung wird nachstehend anhand des in der Zeichnung dargestellten Ausführungsbeispiels erläutert, bei dem der tragbare Datenträger als eine Chipkarte ausgebildet ist.

Es zeigen:
- Fig. 1: eine schematische Blockdarstellung eines Ausführungsbeispiels des erfindungsgemäß ausgebildeten Systems,
- Fig. 2: ein Schema zur Veranschaulichung des prinzipiellen Ablaufs der Kommunikation zwischen der Chipkarte und dem Endgerät im Rahmen der Erfindung und
- Fig. 3: ein Flussdiagramm zur Veranschaulichung der Abläufe bei der Ausführung der Hilfsfunktion.

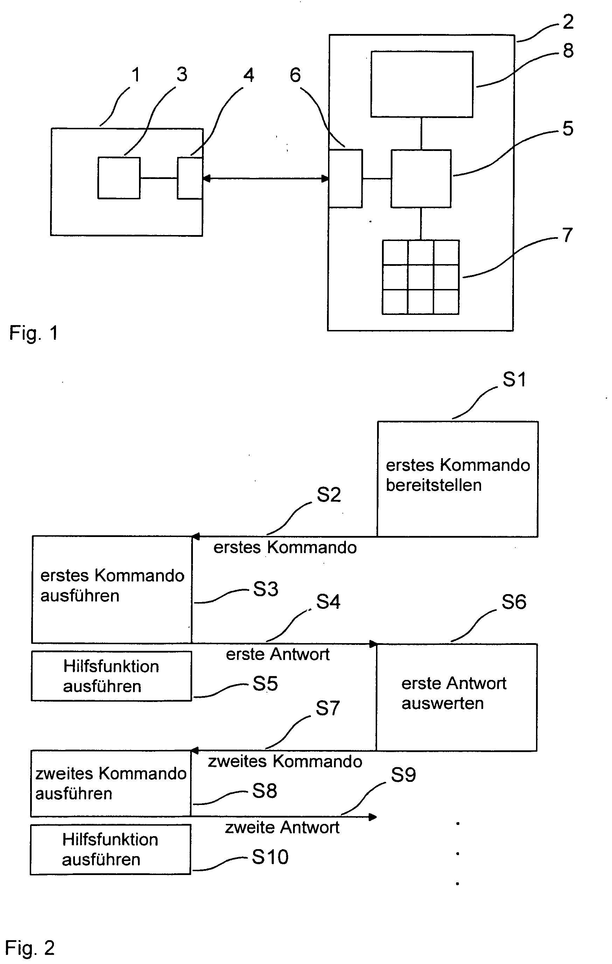

Fig. 1 zeigt eine schematische Blockdarstellung eines Ausführungsbeispiels des erfindungsgemäß ausgebildeten Systems. Das System weist eine Chipkarte 1 und ein Endgerät 2 auf, die miteinander kommunizieren. Die Chipkarte 1 verfügt über einen integrierten Schaltkreis 3, der insbesondere als ein Mikroprozessor ausgebildet ist. Weiterhin verfügt die Chipkarte 1 über eine kartenseitige Übertragungseinrichtung 4, die mit dem integrierten Schaltkreis 3 verbunden ist. Je nach Ausführungsform der Chipkarte 1 kann es sich bei der kartenseitigen Übertragungseinrichtung 4 um ein Kontaktfeld für eine Datenübertragung durch eine berührende Kontaktierung oder um eine Antenne für eine kontaktlose Datenübertragung handeln.

Das Endgerät 2 verfügt über eine Geräteelektronik 5, die insbesondere einen Mikroprozessor beinhalten kann. Weiterhin weist das Endgerät 2 eine geräteseitige Übertragungseinrichtung 6, eine Tastatur 7 und eine Anzeigeeinrichtung 8 auf, die jeweils mit der Geräteelektronik 5 verbunden sind. Bei der geräteseitigen Übertragungseinrichtung 6 kann es sich um eine Kontaktiereinheit zur berührenden Kontaktierung der als Kontaktfeld ausgeführten kartenseitigen Übertragungseinrichtung 4 handeln. Ebenso kann die geräteseitige Übertragungseinrichtung 6 als eine Antenne ausgebildet sein.

Über die kartenseitige Übertragungseinrichtung 4 und die geräteseitige Übertragungseinrichtung 6 wird eine bidirektionale Datenübertragung zwischen der Chipkarte 1 und dem Endgerät 2 durchgeführt, die durch einen Doppelpfeil angedeutet ist. Diese Datenübertragung wird beim erfindungsgemäßen System dadurch besonders effizient durchgeführt, dass seitens der Chipkarte 1 auftretende Wartezeiten von der Chipkarte 1 zur vorgezogenen Bearbeitung zukünftiger Kommandos genutzt werden. Dies wird anhand von Fig. 2 näher erläutert.

Fig. 2 zeigt ein Schema zur Veranschaulichung des prinzipiellen Ablaufs der Kommunikation zwischen der Chipkarte 1 und dem Endgerät 2 im Rahmen der Erfindung. Wie für sich bereits bekannt übermittelt das Endgerät 2 bei dieser Kommunikation Kommandos an die Chipkarte 1. Die Kommandos werden von der Chipkarte 1 ausgeführt und die dabei ermittelten Ergebnisse jeweils als Antwort an das Endgerät 2 übermittelt. In Fig. 2 ist ein Ausschnitt dieser Sequenz aus Kommandos und Antworten dargestellt, die gemäß der gewählten Darstellungsart von oben nach unten zeitlich aufeinander folgen. Dabei sind die Aktionen der Chipkarte 1 auf der linken Seite und die Aktionen des Endgeräts 2 auf der rechten Seite dargestellt. Der dargestellte Ausschnitt beginnt nicht bereits mit der Aktivierung der Chipkarte 1, sondern erst zu einem späteren Zeitpunkt, zu dem bereits Kommandos zur Abarbeitung einer Anwendung übermittelt werden. Dies bedeutet, dass die typische Anschaltsequenz der Chipkarte 1 nicht dargestellt ist. Bei der Anwendung kann es sich zum Beispiel um eine mit der Chipkarte 1 durchgeführte Geldkartenzahlung handeln. In entsprechender Weise können auch andere Anwendungen des bargeldlosen Zahlungsverkehrs oder sonstige Anwendungen abgewickelt werden, bei denen vom Endgerät 2 mehrere Kommandos in einer vorgegebenen Reihenfolge an die Chipkarte 1 übermittelt werden.

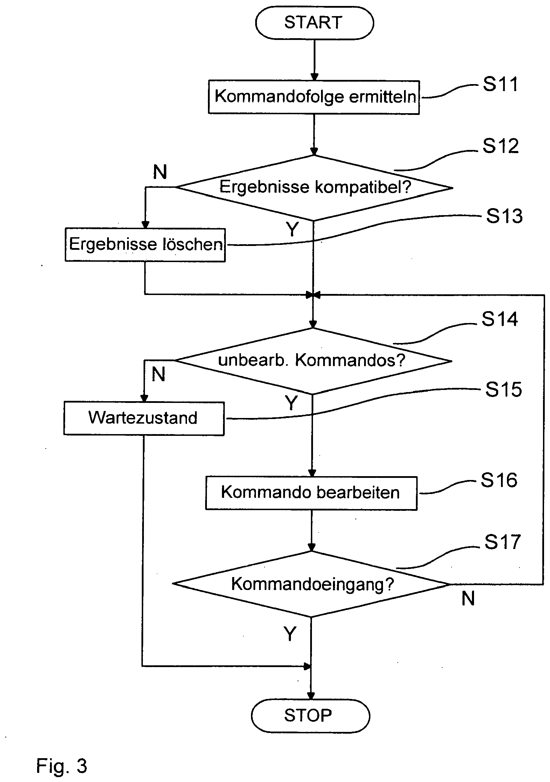

Der in Fig. 2 dargestellte Ablauf beginnt mit einem Schritt S1, in dem das Endgerät 2 ein erstes Kommando bereitstellt. Bei einer Geldkartenzahlung kann es sich bei dem ersten Kommando beispielsweise um das Kommando "SELECT FILE DF_BÖRSE" handeln. In einem darauf folgenden Schritt S2 wird das erste Kommando vom Endgerät 2 an die Chipkarte 1 übermittelt. Hierzu wird die zwischen dem Endgerät 2 und der Chipkarte 1 kontaktbehaftet oder kontaktlos ausgebildet Datenverbindung verwendet. Nach Eingang bei der Chipkarte 1 führt diese das erste Kommando in einem Schritt S3 aus und übermittelt das dabei erzielte Ergebnis in einem Schritt S4 als eine erste Antwort an das Endgerät 2. Bei der Geldkartenzahlung könnte diese Antwort ein "OK" sein. Anstelle bis zum Eingang des nächsten Kommandos in einen Wartezustand zu gehen, ruft die Chipkarte 1 anschließend an Schritt S4 in einem Schritt S5 erfindungsgemäß eine Hilfsfunktion auf. Mit der Hilfsfunktion werden zukünftig anstehende Kommandos vorgezogen bearbeitet. Im Rahmen der vorgezogenen Bearbeitung werden Vorbereitungen für die Ausführung der Kommandos getroffen und/oder die Kommandos ganz oder teilweise ausgeführt. Die Ausführung der Hilfsfunktion wird im Einzelnen anhand von Fig. 3 erläutert.

Nach Eingang der ersten Antwort beim Endgerät 2 wertet das Endgerät 2 in einem Schritt S6 die erste Antwort aus und stellt ein zweites Kommando bereit. Bei der Geldkartenzahlung könnte es sich um das Kommando "READ RECORD EF_ID" handeln. In einem darauf folgenden Schritt S7 übermittelt das Endgerät 2 das zweite Kommando über die Datenverbindung an die Chipkarte 1. Die Chipkarte 1 hat den Eingang des zweiten Kommandos durch die im Schritt S5 aufgerufene Hilfsfunktion bereits vorhergesehen und entsprechend vorbereitet. Dadurch verkürzt sich die Zeit für die Ausführung des zweiten Kommandos und die Ermittlung der zweiten Antwort durch die Chipkarte 1 im Schritt S8. Bei der Geldkartenzahlung könnte die Chipkarte 1 in Erwartung des Kommandos "READ RECORD EF_ID" das entsprechende File selektieren, prüfen und eine zugehörige Antwort zusammenstellen. An Schritt S8 schließt sich ein Schritt S9 an, in dem die Chipkarte 1 die zweite Antwort an das Endgerät 2 übermittelt. Danach startet die Chipkarte 1 in einem Schritt S10 wieder die Hilfsfunktion.

Gemäß diesem Schema wird die Kommunikation zwischen der Chipkarte 1 und dem Endgerät 2 fortgesetzt, bis die Anwendung vollständig abgearbeitet ist. Dabei können im Fall der Geldkartenanwendung beispielsweise in Erwartung des Kommandos "GET CHALLENGE" eine Zufallszahl bereitgestellt werden oder in Erwartung des Kommandos "READ EF SEQUENCE" festgestellt werden, ob ein Elementary File existiert, ob ein Zugriff darauf erlaubt ist und/oder ob der EEPROM Speicher konsistent ist. Weiterhin könnten bei einer vorgezogenen Bearbeitung eines Kommandos, mit dem ein Zertifikat angefordert wird, im Voraus mehrere, im Zertifikat zu berücksichtigende Files untereinander geschrieben und/oder ausgelesen werden. Zum Teil kann auch eine Prüfsummenberechnung vorab durchgeführt werden.

Je zeitaufwendiger jeweils die Ausführung der erwarteten Kommandos durch die Chipkarte 1 ist, desto größer ist die durch deren vorgezogene Bearbeitung erzielbare Zeitersparnis. Außerdem hängt die erzielbare Zeitersparnis auch von der Zeitspanne ab, die vom Endgerät 2 jeweils für das Auswerten der Antwort und die Bereitstellung des nächsten Kommandos benötigt wird. Ist diese Zeitspanne sehr lang, so ist auch eine große Zeitersparnis möglich, da der Chipkarte 1 viel Zeit für die vorgezogene Bearbeitung zukünftiger Kommandos zur Verfügung steht. Eine relativ lange Zeitspanne wird beispielsweise dann benötigt, wenn vom Endgerät 2 aufwendige kryptographische Berechnungen durchzuführen sind oder eine Online-Kommunikation mit einem Host-System erforderlich ist.

Fig. 3 zeigt ein Flussdiagramm zur Veranschaulichung der Abläufe bei der Ausführung der Hilfsfunktion. Der Durchlauf des Flussdiagramms beginnt mit einem Schritt S11, bei dem ermittelt wird, welche Kommandofolge vorliegt. Viele Chipkartenanwendungen laufen gemäß fest vorgegebenen Kommandofolgen ab, so dass sich die zukünftig bei der Chipkarte 1 eingehenden Kommandos vorhersehen lassen, wenn der Chipkarte 1 die Kommandofolge bekannt ist. Dies ist besonders einfach, wenn die Chipkarte 1 nur für eine Anwendung vorgesehen ist und dieser Anwendung eine einzige Kommandofolge zugeordnet ist. In diesem Fall kann sich Schritt S11 auf eine Prüfung, ob die Chipkarte 1 bei einem passenden Endgerät 2 eingesetzt wird, beschränken oder ganz entfallen. Stehen dagegen mehrere vorgegebene Kommandofolgen zur Auswahl, so kann beispielsweise anhand der bereits bei der Chipkarte 1 eingegangenen Kommandos ermittelt werden, welche dieser Kommandofolgen tatsächlich vorliegt. Bestehen die in Frage kommenden Kommandofolgen verglichen miteinander jeweils vollständig aus unterschiedlichen Kommandos, so genügt der Chipkarte 1 bereits ein einziges Kommando, um die vorliegende Kommandofolge zweifelsfrei zu identifizieren. Überschneiden sich die einzelnen Kommandofolgen dagegen im Hinblick auf die verwendeten Kommandos, so werden in der Regel mehrere Kommandos für eine Identifizierung der vorliegenden Kommandofolge erforderlich sein. In diesem Fall kann zunächst auf Basis eines oder mehrer Kommandos eine plausible Kommandofolge angenommen werden und diese Annahme bei jeder erneuten Ausführung der Hilfsfunktion geprüft und erforderlichenfalls verworfen werden.

An Schritt S11 schließt sich ein Schritt S12 an, in dem geprüft wird, ob ggf. bereits vorhandene Ergebnisse der vorgezogenen Bearbeitung mit der aktuell im Schritt S11 ermittelten Kommandofolge kompatibel sind. Dies wäre beispielsweise dann nicht der Fall, wenn diese Ergebnisse auf Basis einer ursprünglich angenommenen Kommandofolge ermittelt wurden, die nicht mit der aktuell in Schritt S11 ermittelten Kommandofolge übereinstimmt. Unter diesen Umständen, d. h. wenn die Prüfung des Schrittes S12 negativ verläuft, schließt sich an Schritt S12 ein Schritt S13 an, bei dem die Ergebnisse gelöscht werden. Ein Löschen der Ergebnisse kann auch grundsätzlich jeweils beim erstmaligen Aufruf der Hilfsfunktion im Rahmen einer Kommunikation zwischen der Chipkarte 1 und dem Endgerät 2 durchgeführt werden. Wird in Schritt S12 eine Kompatibilität der Ergebnisse festgestellt, so schließt sich ein Schritt S14 an, zu dem man auch im Anschluss an den Schritt S13 gelangt. Im Schritt S14 wird geprüft, ob die Kommandofolge Kommandos enthält, die bislang noch nicht einer vorgezogenen Bearbeitung zugeführt wurden. Ist dies nicht der Fall, d. h. es sind bereits alle Kommandos der Kommandofolge vorgezogen bearbeitet, so folgt auf Schritt S14 ein Schritt S15, bei dem die Chipkarte 1 in einen Wartezustand geht, der mit dem Eingang des nächsten Kommandos vom Endgerät 2 aufgehoben wird. Mit Schritt S15 ist der Durchlauf des Flussdiagramms beendet. Andernfalls, d. h. wenn im Schritt S14 wenigstens ein unbearbeitetes Kommando in der Kommandofolge festgestellt wird, schließt sich an Schritt S14 ein Schritt S16 an, bei dem das nächste Kommando der Kommandofolge vorgezogen bearbeitet wird. Auf Schritt S16 folgt ein Schritt S17, in dem geprüft wird, ob zwischenzeitlich ein Kommando vom Endgerät 2 an die Chipkarte 1 übermittelt wurde. Falls kein Kommando bei der Chipkarte 1 eingegangen ist, wird anschließend an Schritt S17 mit Schritt 14 fort gefahren. Andernfalls ist der Durchlauf des Flussdiagramms beendet, da die Ausführung eines aktuell anstehenden Kommandos Vorrang vor der vorgezogenen Bearbeitung zukünftig erwarteter Kommandos hat.

Im Rahmen der Erfindung können für eine vorgezogene Bearbeitung nicht nur die Wartezeiten der Chipkarte 1 auf das jeweils nächste Kommando des Endgeräts 2 genutzt werden, sondern auch sonstige Wartezeiten, beispielsweise bei Schreibvorgängen in einen nichtflüchtigen Speicher, wie einem EEPROM. Außerdem ist die Erfindung nicht auf die Anwendung bei Chipkarten 1 oder anderen tragbaren Datenträgern beschränkt, sondern kann bei beliebigen Betriebssystemen oder sonstiger Software eingesetzt werden.

## Patentansprüche

1. Verfahren zum Betreiben eines tragbaren Datenträgers (1), der einen integrierten Schaltkreis (3) aufweist und mit einem Endgerät (2) kommuniziert, wobei dem tragbaren Datenträger (1) von dem Endgerät (2) Kommandos übermittelt und vom tragbaren Datenträger (1) im Rahmen der Kommunikation mehrere Kommandos gemäß einer vorgegebenen Abfolge ausgeführt werden, **dadurch gekennzeichnet, dass** die vorgegebene Abfolge vom tragbaren Datenträger (1) ermittelt wird und dass vom tragbaren Datenträger (1) wenigstens ein zukünftig anstehendes Kommando einer vorgezogenen Bearbeitung unterzogen wird, bevor es gemäß der vorgegebenen Abfolge zur Ausführung ansteht, wobei im Rahmen der vorgezogenen Bearbeitung die Ausführung des Kommandos vorbereitet wird und/oder das Kommando wenigstens teilweise ausgeführt wird.

2. Verfahren nach Anspruch 1, **dadurch gekennzeichnet, dass** zur Durchführung der vorgezogenen Bearbeitung eine dafür vorgesehene Funktion aufgerufen wird.

3. Verfahren nach einem der vorhergehenden Ansprüche, **dadurch gekennzeichnet, dass** die vorgezogene Bearbeitung nur dann veranlasst wird, wenn kein Kommando aus der vorgegebenen Abfolge von Kommandos aktuell zur Ausführung ansteht.

4. Verfahren nach einem der vorhergehenden Ansprüche, **dadurch gekennzeichnet, dass** geprüft wird, welche Kommandos bereits vorgezogen bearbeitet wurden.

5. Verfahren nach einem der vorhergehenden Ansprüche, **dadurch gekennzeichnet, dass** die vorgezogene Bearbeitung beendet wird, wenn festgestellt wird, dass ein Kommando aus der vorgegebenen Abfolge von Kommandos aktuell zur Ausführung ansteht.

6. Verfahren nach einem der vorhergehenden Ansprüche, **dadurch gekennzeichnet, dass** das Ergebnis der vorgezogenen Bearbeitung eines Kommando herangezogen wird, wenn diese Kommando gemäß der vorgegebenen Abfolge aktuell zur Ausführung ansteht.

7. Verfahren nach einem der vorhergehenden Ansprüche, **dadurch gekennzeichnet, dass** die vorgegebene Abfolge von Kommandos vom tragbaren Datenträger (1) ermittelt wird.

8. Verfahren nach Anspruch 7, **dadurch gekennzeichnet, dass** die Ermittlung auf Basis wenigstens eines bereits zur Ausführung anstehenden Kommando aus der vorgegebenen Abfolge von Kommandos durchgeführt wird.

9. Verfahren nach einem der Ansprüche 7 oder 8, **dadurch gekennzeichnet, dass** die ermittelte Abfolge zu einem späteren Zeitpunkt vom tragbaren Datenträger (1) überprüft wird.

10. Verfahren nach Anspruch 9, **dadurch gekennzeichnet, dass** die Ergebnisse der vorgezogenen Bearbeitung verworfen werden, wenn die Überprüfung ergibt, dass die vorgegebene Abfolge von Kommandos, auf deren Basis die vorgezogene Bearbeitung durchgeführt wurde, in unzutreffender Weise ermittelt wurde.

11. Verfahren nach Anspruch 10, **dadurch gekennzeichnet, dass** die vorgezogene Bearbeitung jeweils innerhalb eines Zeitraums veranlasst wird, innerhalb dessen der tragbare Datenträger (1) auf den Eingang eines Kommandos vom Endgerät (2) wartet.

12. Verfahren nach einem der vorhergehenden Ansprüche, **dadurch gekennzeichnet, dass** der tragbarer Datenträger (1) durch Aufruf einer Hilfsfunktion den Eingang eines zukünftig anstehenden Kommandos vorhergesehen und entsprechend vorbereitet hat.

13. Tragbarer Datenträger (1) mit einem integrierten Schaltkreis (3) zur Ausführung von Kommandos, wobei im integrierten Schaltkreis (3) eine Funktionalität implementiert ist, die mit einem Endgerät (2) kommuniziert, wobei dem tragbaren Datenträger (1) von dem Endgerät (2) Kommandos übermittelt und vom tragbaren Datenträger (1) im Rahmen der Kommunikation mehrere Kommandos gemäß einer vorgegebenen Abfolge ausgeführt werden, **dadurch gekennzeichnet, dass** vom tragbaren Datenträger (1) wenigstens ein zukünftig anstehendes Kommando einer vorgezogenen Bearbeitung unterzogen wird, bevor es gemäß einer vorgegebenen Abfolge zur Ausführung ansteht, wobei im Rahmen der vorgezogenen Bearbeitung die Ausführung des Kommandos vorbereitet wird und/oder das Kommando wenigstens teilweise ausgeführt wird.

14. Tragbarer Datenträger nach Anspruch 13, **dadurch gekennzeichnet, dass** der tragbarer Datenträger (1) durch Aufruf einer Hilfsfunktion den Eingang eines zukünftig anstehenden Kommandos vorhersieht und entsprechend vorbereitet.

15. Tragbarer Datenträger nach Anspruch 13 oder 14, **dadurch gekennzeichnet, dass** er als eine Chipkarte ausgeführt ist.

16. System mit einem tragbaren Datenträger (1) und mit einem Endgerät (2), wobei der tragbare Datenträger (1) und das Endgerät (2) Übertragungseinrichtungen (4, 6) aufweisen, über die sie miteinander kommunizieren können und im Rahmen dieser Kommunikation vom tragbaren Datenträger (1) mehrere Kommandos gemäß einer vorgegebenen Abfolge ausgeführt werden, **dadurch gekennzeichnet, dass** der Datenträger (1) nach Anspruch 13, 14 oder 15 eingerichtet ist.

## Claims

1. A method for operating a portable data carrier (1) which has an integrated circuit (3) and communicates with an end device (2), wherein the end device (2) transmits commands to the portable data carrier (1) and within the framework of the communication several commands are executed by the portable data carrier (1) according to a pre-specified sequence, **characterized in that**
the pre-specified sequence is established by the portable data carrier (1) and that at least one in future pending command is subjected to an early processing by the portable data carrier (1) before it is pending for execution according to the pre-specified sequence, wherein within the framework of the early processing, the execution of the command is prepared and/or the command is executed at least partly.

2. The method according to claim 1, **characterized in that** for carrying out the early processing, an accordingly provided function is called up.

3. The method according to any of the preceding claims, **characterized in that** the early processing is prompted only if no command from the pre-specified sequence of commands is currently pending execution.

4. The method according to any of the preceding claims, **characterized in that** it is checked which commands were already processed earlier.

5. The method according to any of the preceding claims, **characterized in that** the early processing is ended if it is ascertained that a command from the pre-specified sequence of commands is currently pending execution.

6. The method according to any of the preceding claims, **characterized in that** the result of the early processing of a command is drawn upon when according to the pre-specified sequence this command is currently pending execution.

7. The method according to any of the preceding claims, **characterized in that** the pre-specified sequence is established by commands of the portable data carrier (1).

8. The method according to claim 7, **characterized in that** the establishment is carried out on the basis of at least one command from the pre-specified sequence of commands already pending execution.

9. The method according to any of claims 7 or 8, **characterized in that** the established sequence is checked at a later point in time by the portable data carrier (1).

10. The method according to claim 9, **characterized in that** the results of the early processing are discarded if the check yields that the pre-specified sequence was carried out by commands on whose basis the early processing was established in incorrect manner.

11. The method according to claim 10, **characterized in that** the early processing is prompted respectively within a time period within which the portable data carrier (1) waits for the input of a command from the end device (2).

12. The method according to any of the preceding claims, **characterized** that the portable data carrier (1) has foreseen the input of an in future pending command by calling up an auxiliary function and has prepared accordingly.

13. The portable data carriers (1) having an integrated circuit (3) for executing commands, wherein in the integrated circuit (3) a functionality is implemented which communicates with an end device (2), wherein commands are transmitted from the end device (2) to the portable data carrier (1) and within the framework of the communication several commands are executed by the portable data carrier (1) according to a pre-specified sequence, **characterized in that** at least one in future pending command is subjected to an early processing by the portable data carrier (1), before it is pending for execution according to a pre-specified sequence, wherein within the framework of the early processing the execution of the command is prepared and/or the command is executed at least partly.

14. The portable data carriers according to claim 13, **characterized in that** the portable data carrier (1) foresees the input of an in future pending command by calling up an auxiliary function and prepares accordingly.

15. The portable data carriers according to claim 13 or 14, **characterized in that** it is designed as a chip card.

16. A system having a portable data carrier (1) and having an end device (2), wherein the portable data carrier (1) and the end device (2) have transfer devices (4, 6) via which they can communicate with each other and within the framework of this communication several commands are executed by the portable data carrier (1) according to a pre-specified sequence, **characterized in that** the portable data carrier (1) is devised according to claim 13, 14 or 15.

## Revendications

1. Procédé de fonctionnement d'un support de données portable (1) qui est doté d'un circuit intégré (3) et qui communique avec un terminal (2), cependant que, au support de données portable (1), par le terminal (2), des ordres sont transmis, et que, par le support de données portable (1) dans le cadre de la communication, plusieurs ordres sont exécutés conformément à une suite prédéterminée, **caractérisé en ce que** la suite prédéterminée est déterminée par le support de données portable (1) et que, par le support de données portable (1), au moins un ordre prévu pour être exécuté à l'avenir est soumis à un traitement anticipé avant d'être, conformément à la suite prédéterminée, sur le point d'être exécuté, cependant que, dans le cadre du traitement anticipé, l'exécution de l'ordre est préparée et/ou l'ordre est au moins partiellement exécuté.

2. Procédé selon la revendication 1, **caractérisé en ce que**, pour l'accomplissement du traitement anticipé, une fonction prévue pour cela est appelée.

3. Procédé selon une des revendications précédentes, **caractérisé en ce que** le traitement anticipé n'est déclenché que quand aucun ordre de la suite prédéterminée d'ordres n'est actuellement sur le point d'être exécuté.

4. Procédé selon une des revendications précédentes, **caractérisé en ce qu'**il est vérifié quels ordres ont déjà été traités avec anticipation.

5. Procédé selon une des revendications précédentes, **caractérisé en ce que** le traitement anticipé est achevé quand il est constaté qu'un ordre de la suite prédéterminée d'ordres est actuellement sur le point d'être exécuté.

6. Procédé selon une des revendications précédentes, **caractérisé en ce que** le résultat du traitement anticipé d'un ordre est exploité quand cet ordre est, conformément à la suite prédéterminée, actuellement sur le point d'être exécuté.

7. Procédé selon une des revendications précédentes, **caractérisé en ce que** la suite prédéterminée d'ordres est déterminée par le support de données portable (1).

8. Procédé selon la revendication 7, **caractérisé en ce que** la détermination est effectuée sur la base d'au moins un ordre, de la suite prédéterminée d'ordres, déjà sur le point d'être exécuté.

9. Procédé selon une des revendications 7 ou 8, **caractérisé en ce que** la suite déterminée d'ordres est vérifiée ultérieurement par le support de données portable (1).

10. Procédé selon la revendication 9, **caractérisé en ce que** les résultats du traitement anticipé sont rejetés quand la vérification révèle que la suite prédéterminée d'ordres sur la base de laquelle le traitement anticipé a été accompli a été déterminée de manière erronée.

11. Procédé selon la revendication 10, **caractérisé en ce que** le traitement anticipé est respectivement déclenché dans les limites d'un laps de temps dans les limites duquel le support de données portable (1) attend l'entrée d'un ordre du terminal (2).

12. Procédé selon une des revendications précédentes, **caractérisé en ce que** le support de données portable (1) a, par appel d'une fonction auxiliaire, escompté et préparé en conséquence l'entrée d'un ordre prévu pour être exécuté à l'avenir.

13. Support de données portable (1) doté d'un circuit intégré (3) pour l'exécution d'ordres, cependant que, dans le circuit intégré (3), une fonctionnalité est mise en oeuvre, laquelle communique avec un terminal (2), cependant que, au support de données portable (1), par le terminal (2), des ordres sont transmis, et que, par le support de données portable (1), dans le cadre de la communication, plusieurs ordres sont exécutés conformément à une suite prédéterminée, **caractérisé en ce que**, par le support de données portable (1), au moins un ordre prévu pour être exécuté à l'avenir est soumis à un traitement anticipé avant d'être, conformément à une suite prédéterminée, sur le point d'être exécuté, cependant que, dans le cadre du traitement anticipé, l'exécution de l'ordre est préparée et/ou l'ordre est au moins partiellement exécuté.

14. Support de données portable selon la revendication 13, **caractérisé en ce que** le support de données portable (1), par appel d'une fonction auxiliaire, escompte et prépare en conséquence l'entrée d'un ordre prévu pour être exécuté à l'avenir.

15. Support de données portable selon la revendication 13 ou 14, **caractérisé en ce qu'**il est réalisé sous forme d'une carte à puce.

16. Système comprenant un support de données portable (1) et un terminal (2), cependant que le support de données portable (1) et le terminal (2) comportent des équipements de transfert (4, 6) par l'intermédiaire desquels ils peuvent communiquer entre eux, et que, dans le cadre de cette communication, par le support de données portable (1), plusieurs ordres sont exécutés conformément à une suite prédéterminée, **caractérisé en ce que** le support de données portable (1) est conçu selon la revendication 13, 14 ou 15.
